# EUROPEAN PATENT APPLICATION

(11) **EP 2 228 120 A1**
(43) Date of publication of application: **15.09.2010**
(21) Application number: 09154592.1
(22) Date of filing: 09.03.2009
(51) Int. Cl.: B01D 53/22, C01B 3/50

(54) **Operation of more than one furnace**

(71) Applicant: Shell Internationale Research Maatschappij B.V., 2596 HR Den Haag (NL)
(72) Inventor: Du Cauze De Nazelle, Gerard, 1031 HW Amsterdam (NL); Nijmeijer, Arian, 1031 HW Amsterdam (NL); Petrus, Mark, 1031 HW Amsterdam (NL)
(74) Representative: Matthezing, Robert Maarten

(57) **Abstract**

Process comprising the operation of more than one furnace, which furnaces run on a fuel as provided by a common fuel delivery system, wherein to said fuel a hydrogen comprising gas is provided which is prepared by (i) reforming, steam reforming or gasification of a hydrocarbon feedstock to obtain a gas comprising hydrogen and carbon monoxide, (ii) converting part of the carbon monoxide in said gas to hydrogen and carbon dioxide by means of a catalysed water gas shift reaction to obtain a shifted gas and (iii) separating hydrogen from said shifted gas by means of a membrane separation to obtain the hydrogen comprising gas and a carbon dioxide comprising gas, wherein the carbon dioxide comprising gas is obtained at a more elevated pressure than the hydrogen comprising gas.

## Description

The present invention is directed to a process comprising the operation of more than one furnace, which furnaces run on the same fuel as provided by a common fuel delivery system.

In many industrial processes, such as refineries, chemical plants and the like, a system comprising furnaces as described above is used to generate steam, heat up feed streams, operate distillation equipment and/or perform chemical reactions. In a typical operation a hydrocarbon-based fuel is combusted with air in such a furnace resulting in a flue gas containing carbon dioxide. This flue gas is typically discharged into the environment via various stacks. Presently there is a desire to limit the amount of carbon dioxide discharged into the environment. A possible solution would be to capture the CO₂ from the flue gas as it is discharged from the various stacks. Capturing carbon dioxide from the numerous stacks is not attractive because of the high number of stacks, the typically scattered locations of these stacks across the industrial process and the low release pressure and high dilution of CO₂ in the flue gas. All these factors alone or in combination make it difficult to capture CO₂ from these flue gasses.

It is a desire to provide a more simple process to capture CO₂ in a process comprising the operation of more than one furnace, which furnaces run on the same fuel as provided by a common fuel delivery system.

The following process achieves this object. Process comprising the operation of more than one furnace, which furnaces run on a fuel as provided by a common fuel delivery system, wherein to said fuel delivery system a hydrogen comprising gas is provided which is prepared by (i) reforming, steam reforming or gasification of a hydrocarbon feedstock to obtain a gas comprising hydrogen and carbon monoxide, (ii) converting part of the carbon monoxide in said gas to hydrogen and carbon dioxide by means of a catalysed water gas shift reaction to obtain a shifted gas and (iii) separating hydrogen from said shifted gas by means of a membrane separation to obtain the hydrogen comprising gas and a carbon dioxide comprising gas, wherein the carbon dioxide comprising gas is obtained at a more elevated pressure than the hydrogen comprising gas.

The invention is also directed to a system in which the above process can be performed. The system comprises one or more furnaces, a common fuel delivery system connected to said furnaces, a reforming, steam reforming or gasification unit fluidly connected to a hydrocarbon feedstock supply line, a water gas shift unit fluidly connected to the reforming, steam reforming or gasification unit and a membrane separation unit fluidly connected to the water gas shift unit, wherein the membrane separation unit has an outlet for a hydrogen rich permeate which is fluidly connected to the common fuel delivery system.

The invention is also directed to a method for retrofitting an existing system to the above system, wherein the existing system comprises one or more furnaces, a common fuel delivery system connected to said furnaces and a hydrocarbon-based fuel supply line connected to said common fuel delivery system, wherein to said existing system is added a reforming, steam reforming or gasification unit, a water gas shift unit fluidly connected to the reforming, steam reforming or gasification unit and a membrane separation unit fluidly connected to the water gas shift unit, wherein the membrane separation unit has an outlet for a hydrogen rich permeate which is fluidly connected to the common fuel delivery system and wherein the hydrocarbon-based fuel supply line of the existing system is connected to the reforming, steam reforming or gasification unit.

The process according the invention is advantageous because carbon dioxide is obtained at a central location and at a high pressure making the CO₂ suitable for further processing and transportation, like for example underground storage. The hydrogen is obtained at a lower pressure, which makes the hydrogen suited to be added to the common fuel delivery system that typically operates at such lower pressures. The hydrogen as added to the fuel system and used in the furnaces will replace all or part of the typically used hydrocarbon based fuel. As a result the amount of carbon dioxide as emitted via the stacks of the furnaces will reduce or can even be totally reduced to zero. A further advantage is that an existing process comprising the operation of more than one furnace, which furnaces run on a fuel as provided by a common fuel delivery system, can be easily adapted to the process according to the invention by providing steps (i)-(iii). The invention and its preferred embodiments will be further described below.

The invention is directed to improving a process comprising the operation of more than one furnace. With a furnace is meant a device for increasing the temperature of a fluid or gas as flowing through one or more conduit by means of indirect heat exchange against combustion gasses providing heat to said fluid or gas. Such furnaces are well known and described in Perry's Chemical Engineers' Handbook (8th Edition), by: Green, Don W.; Perry, Robert H. © 2008 McGraw-Hill, pages 24-42 to 24-44. Examples of such furnaces are boilers in which steam is generated and the distillation feed and reboiler furnaces as used in many processes. The furnace can also be used to increase the temperature of a feed to a chemical reaction step. With a furnace is also meant a chemical reactor in which an endothermic reaction takes place. Suitably such a reaction takes place in one or more conduits and the required heat for the reaction is provided by means of indirect heat exchange against combustion gasses. Examples of suited furnaces for performing chemical reactions are steam cracking furnaces to prepare lower olefins and conventional steam reforming reactors.

The process comprising the operation of more than one furnace may be processes comprising any of the above furnace types or combinations of said furnaces. Examples of processes comprising the operation of more than one furnace, which furnaces run on the same fuel as provided by a common fuel delivery system are crude oil refineries, steam crackers, methanol plants, methanol to olefins plants, liquid natural gas plants (LNG), gas to liquids (GTL), biomass to liquids (BTL) and coal to liquids plants (CTL). With a gas, biomass or coal to liquids plant is here meant a process wherein this feed is first converted to a mixture of carbon monoxide and hydrogen and wherein this gas mixture is used to perform a Fischer-Tropsch reaction to obtain a paraffin waxy product, which is suitably upgraded to liquids by means of one or more hydroprocessing steps.

Not all furnaces of a process need to be fuelled by the common fuel delivery system. The advantages of the present invention can also be achieved when only part of the total of all the furnaces of a process use the fuel comprising the added hydrogen. Suitably all of the furnaces use the fuel as provided by the common fuel system to take full benefit of the advantages of the present invention. Suitably the process comprises more than 5 furnaces, more preferably more than 10 furnaces and even more preferably more than 20 furnaces connected to the common fuel delivery system. It is obvious that the greater the number of furnaces the greater the advantage as compared to a situation where CO₂ has to be captured at every furnace separately. Preferably at least 90% of the total number of furnaces uses the fuel as provided by the common fuel delivery system.

The heat exchange in the furnace may be radiant and/or convective. The combustion gasses are obtained by combustion of a fuel with air, typically in multiple burners per furnace.

The fuel as provided by a common fuel delivery system to said furnaces may comprise fully or partly of hydrogen as prepared in steps (i)-(iii). The fuel may also comprise hydrocarbons having 1 to 4 carbon atoms, like methane, ethane, propane, butane and iso-butane, carbon monoxide and nitrogen. If the fuel in the common fuel system comprises a high content of hydrogen it may be advantageous to use specially adapted burners in the furnaces, which reduce the NOx formation during combustion.

The hydrocarbon feedstock as used in the process according to the present invention may be a gaseous feedstock, for example methane and methane containing gasses, like natural gas, for example as obtained from a nearby natural gas grid. Preferred gaseous hydrocarbon feedstocks are the gaseous hydrocarbons that are produced within the process itself. Examples of such gasses are the gaseous by-products of typical refinery unit operations such as hydrocracking, catalytic cracking, thermal cracking, or the saturated by-products of a typical steam cracking process, for example methane, or the by-products of a typical Fischer-Tropsch synthesis process, such as for example the Fischer-Tropsch off-gas and the gaseous by-products generated in the hydroprocessing units downstream the Fischer-Tropsch synthesis reactor.

The gaseous fuel, which is typically used as the fuel for the furnaces in the prior art processes, comprise hydrocarbons having 1 to 4 carbon atoms, like methane, ethane, propane, butane and iso-butane. When retrofitting an existing system to the system according to the invention it is found advantageous to use this gaseous fuel or part of said fuel as the hydrocarbon feedstock to make hydrogen. In this manner an end use is found for the gaseous fuel of the existing process by replacing said fuel by hydrogen in accordance with the present invention.

The hydrocarbon feedstock may also be a liquid feedstock as for example the liquids as obtained when refining a mineral crude oil. Examples are naphtha, kerosene, gas oil and vacuum distillates. Preferred liquid hydrocarbon feedstocks are vacuum residues and asphaltenes as obtained when for example de-asphalting a residue fraction. The residue fractions may be directly distilled fractions of a crude mineral oil or alternatively be the residue fraction as isolated from the effluent of a residue conversion process. Such fractions are preferred because they posses a low value. Another liquid feedstock is the asphaltene fraction when de-asphalting a tar sands derived residue fraction. The liquid hydrocarbon feedstock may also be a pyrolysis oil as obtained from biomass sources. In a steam cracker process a suitable liquid hydrocarbon feedstock is the ethylene cracker residue.

Solid hydrocarbon feedstocks can be petroleum coke (petcoke), coal and biomass. Any combination of the above feedstocks is also possible, for example mixtures of the above described residue and solid biomass. Preferably the biomass is first subjected to a torrefaction pretreatment before being used as feedstock.

The invention is especially directed to a refinery process and wherein the hydrocarbon feedstock is a gaseous fuel comprising hydrocarbons having 1 to 4 carbon atoms, a liquid residue or solid petroleum coke.

The invention is also especially directed to a Fischer-Tropsch synthesis process comprising a Fischer-Tropsch reactor and hydro-processing units downstream the Fischer-Tropsch synthesis reactor and wherein the hydrocarbon feedstock is the gaseous by-product as generated in the Fischer-Tropsch synthesis reactor and/or the gaseous by-products generated in the hydro-processing units.

The invention is also especially directed to a steam cracker process to make ethylene and propylene, wherein the furnaces are steam cracking furnaces and wherein the hydrocarbon feedstock is a gas comprising the methane by-product of the steam cracking process.

Step (i) is performed by reforming, steam reforming or gasification of the above described hydrocarbon feedstock to obtain a gas comprising hydrogen and carbon monoxide. Gasification, as described in "Gasification" by C. Higman and M. van der Burgt, 2003, Elsevier Science, Chapter 5, pages 85-152, is a well known technology which can convert the above described gaseous, liquid and solid hydrocarbon feedstocks to a gas comprising hydrogen and carbon monoxide.

Reforming, also referred to as auto-thermal reforming, is a well known technology to convert, suitably gaseous, hydrocarbon feedstocks to gas comprising hydrogen and carbon monoxide. The required heat for performing the catalytic reforming reaction is obtained by partially combusting the feed with oxygen and contacting the resultant.

Steam reforming is also a well known technology to convert, suitably gaseous, hydrocarbon feedstocks in the presence of steam to gas comprising hydrogen and carbon monoxide. The required heat for the reforming reaction is provided by indirect heat exchange in a furnace. Preferably said furnace uses the fuel from the common fuel system.

If the feedstock comprises C₂ and higher hydrocarbons it may be advantageous to convert these hydrocarbons to methane in a pre-reformer prior to using this feed in the reforming, steam reforming or gasification process.

In step (ii) part of the carbon monoxide in said gas is converted to hydrogen and carbon dioxide by means of a catalysed water gas shift reaction. The catalysed water gas shift reaction is well known and for example described in "Gasification" by C. Higman and M. van der Burgt, 2003, Elsevier Science, Chapter 5, pages 315-318. There exists sweet and sour water gas shift technologies. For the sweet shift technology it is important that sulphur is absent in the feed to said step. If any sulphur is present in the gas obtained in step (i), as can be the situation when step (i) comprises the gasification of coal, residue or biomass, sulphur needs to be removed. Sulphur removal is well known technology and is for example described in "Gasification" by C. Higman and M. van der Burgt, 2003, Elsevier Science, Chapter 5, pages 298-309.

If step (i) is a steam reforming step typically no sulphur is present in the gas obtained and a sweet shift step is preferably used for step (ii). When a sour water gas shift technology is used some sulphur needs to be present in the gas as fed to said step. A sour water gas shift technology is suitably used when step (i) results in a gas containing some sulphur.

Prior to performing step (iii) it may be advantageous to remove any sulphur present in the shifted gas as some membranes are sensitive towards sulphur. Sulphur may be removed by well known sulphur removal processes as referred to above.

In step (iii) hydrogen is separated from said shifted gas by means of a membrane separation. In step (iii) the hydrogen comprising gas and a carbon dioxide comprising gas is obtained. The carbon dioxide comprising gas is obtained at a more elevated pressure than the hydrogen comprising gas because the separation is performed by means of a membrane, wherein hydrogen is obtained as the permeate gas.

The membrane is thus a so-called H₂-selective membrane and it may be any H₂-selective membrane known in the art. Preferably, the H₂-selective membranes have a permselectivity of H₂ over CO₂ of at least 50, preferably 100, targetting above 1000. Reference herein to permselectivity of a membrane is to the ratio of the permeability of H₂ to the permeability of CO₂. Examples of such membranes are microporous silica membranes, membranes comprising palladium or palladium alloys, polymeric membranes, carbon moleculair sieve membranes. The membrane may be a polymeric membrane. Preferred polymeric membranes are cross-linked or thermally rearranged polymeric membranes. Suitably the membrane is a polyimide or polyaramide based membrane. Commercially available polyimide membranes include Matrimid® obtainable by Ciba Specialty Chemicals Ltd., Switzerland, and P84 obtainable by Degussa AG, Germany. Membranes made from blends of polyimides are also suitable for the gas phase removal of hydrogen from a hydrogen and carbon monoxide containing gas mixture and show a particularly useful selectivity between hydrogen and carbon monoxide. Such membranes are for example described in WO-A-2008046880.

In a preferred embodiment the H₂-selective membrane is a membrane, which permits diffusion of essentially pure hydrogen gas, the diffused gas having less than 1 part per million impurities. Such H₂-selective membranes are preferably based on hydrogen-permeable and hydrogen-selective metals. Hydrogen-permeable hydrogen-selective metals and alloys useful for preparing the membrane include Pt, Ni, Au, Pd, Pd-V, Pd-Ta, Pd-Nb, Pd-Ag, Pd-Cu and Pd-Au. Palladium and its alloys are particularly useful in forming the hydrogen-permeable hydrogen-selective membranes. The hydrogen-permeable hydrogen-selective membrane should be capable of operating at a temperature of at least 150 °C up to 500 °C.

Hydrogen-permeable hydrogen-selective membranes utilizing palladium or a palladium/silver alloy as a hydrogen-permeable hydrogen-selective membrane layer are for example described in US-A-2004/0244590, WO-A-99/30806 and US-A-2008/0282882.

The H₂-selective membranes may have any known configuration suitable for application in the present invention. Examples of suitable membrane configurations are, depending on the membrane material, flat sheet, spiral wound, tubular, hollow fibre or monolithic (multichannel) configurations. The membranes may be positioned in a single membrane unit (stage) or in several units, wherein each unit may be comprised of one or more separate membranes. A possible configuration employing hydrogen selective membranes is described in WO-A-2008118560.

Typically, the number of membranes will depend on the surface area of the separate membranes in combination with the required quantity of hydrogen to be permeated. The membrane units may comprise hydrogen separation membranes of same or different type in terms of composition or configuration. As a consequence, the membrane units may differ in for instance shape, hydrogen permeability, hydrogen permselectivity and/or surface area available for permeation.

Hydrogen is selectively transported from the gas mixture on the retentate side of the membrane, through the membrane, to the permeate side of the membrane. Hydrogen concentration in the shifted gas as supplied to step (iii) will depend on the hydrogen content relative to the carbon content in the hydrocarbon feedstock. The hydrogen content of, for example, the shifted gas, which originates from natural gas feedstock, will therefore be greater than the hydrogen content of a shifted gas, which originated from a liquid residue feedstock. The permeate side of the membrane is in fluid communication with an outlet for the H₂-rich permeate. The H₂-rich permeate is discharged from the permeate side of the membrane. Preferably, the temperature at which the membrane is operated is in the range of from 40 to 190 °C, more preferably for a polymeric membrane between 70 °C and 110 °C. For the hydrogen-permeable hydrogen-selective membranes utilizing palladium or a palladium/silver alloy as a hydrogen-permeable hydrogen-selective membrane layer the temperature at which the membrane is operated can be higher, suitably above 350 °C and preferably below 500 °C. To provide a suitable temperature at which a membrane of a certain type is operated the feed gas entering the membrane can be preheated by any suitable means.

The process of the present invention may be carried out at any suitable pressure difference over the membrane, e.g. between 0.1 and 20 MPa. Preferably the pressure difference is between 3 and 50 bar, more preferably between 0.5 and 3 MPa, wherein the pressure of the shifted gas as supplied to the membrane is higher than the pressure at the permeate side.

The pressure at the permeate side of the membrane is suitably the pressure of the common fuel delivery system. The pressure at the permeate side is thus the pressure of the hydrogen as it is provided to the common fuel delivery system. The pressure of the fuel in the common fuel delivery system will depend on the pressure at which the fuel is combusted and is suitably between 0.2 and 1 MPa and preferably between 0.2 and 0.7 MPa.

The pressure of the shifted gas supplied to step (iii) is suitably between 1 and 25 MPa and will be dependant on the pressure at which step (i) and (ii) is performed. The optimal operating pressure for step (i) will in turn be dependant on the type of hydrocarbon feedstock used in said step. Preferably the pressure of the shifted gas is between 2 and 10 MPa. An advantage of using a shifted gas with a higher pressure is that the CO₂ comprising gas, as obtained in the present process, is obtained at a corresponding high pressure. This makes this gas directly applicable for downstream processing, such as transportation and/or storage, without the necessity to recompress the CO₂ comprising gas.

The selectivity of the specific membrane as used in the process according to the invention can be high as described above. The advantages of the present invention are however also achieved, in part, when some CO₂ ends up in the permeate. This may happen as a result of leakage of the membrane or by means of a by-pass, wherein part of the shifted gas temporarily bypasses the membrane unit. In the process according to the invention the hydrogen rich permeate usually contains more than 50 vol% of hydrogen, suitably between 70 an 100 mol% of hydrogen, preferably between 85 and 100 mol%. The hydrogen lean retentate will usually contain less than 50 vol% of hydrogen based of the full stream, and suitably contains between 1 and 40 mol% of hydrogen, more suitably between 2 and 15 vol%. Preferably the hydrogen content in the retentate is kept as low as possible.

A preferred embodiment of the present invention is wherein the hydrocarbon feedstock is a gaseous hydrocarbon as described above and step (i) is performed by means of steam reforming. Examples of such processes are described in US-A-2003/0068269. In this process a feed stream of methane is both steam-reformed and water-gas shifted in a single reactor in the presence of a hydrogen-selective, hydrogen-permeable membrane. Hydrogen gas is selectively separated from the product stream by diffusion through the membrane, driving the equilibrium of both of the reactions towards product gases. The temperature of the reactor may be controlled to favour production of carbon dioxide together with hydrogen. For example, the reactor may be run at 500 °C to favour producing shift reaction products carbon dioxide and hydrogen, as opposed to producing steam reforming products carbon monoxide and hydrogen which occurs at higher temperatures. The reactor cannot be run efficiently at temperatures much lower than 500 °C since some steam reforming must occur to convert the hydrocarbon to hydrogen and carbon monoxide, and the reforming reaction is a high temperature reaction, typically run at 700 to 1100 °C.

An even more preferred process is described in WO-A-2008/067360. In this process the gaseous hydrocarbon feedstock is first contacted in a step (a) with steam and a reforming catalyst at a temperature of at least 550 °C to produce a first reformed gas containing hydrogen, carbon monoxide, steam and at least one vaporized hydrocarbon. The first reformed gas is subsequently cooled in a step (b) to a temperature of from 200 °C to 500 °C. The cooled reformed gas is contacted in step (c) with a water-gas shift catalyst to produce a first shift gas containing hydrogen, carbon dioxide, steam, and at least one vaporized hydrocarbon. In a step (d) hydrogen is separated by means of a membrane separation from the first shift gas to produce a first hydrogen gas stream and a hydrogen-depleted gas containing carbon dioxide, steam, and at least one vaporized hydrocarbon. In a step (e) the hydrogen-depleted gas is contacted with a reforming catalyst at a temperature of at least 550 °C to produce a second reformed gas containing hydrogen, carbon monoxide, and steam. In a step (f) the second reformed gas is cooled to a temperature of from 200 °C to 500 °C. In a step (g) the cooled second reformed gas is contacted with a water-gas shift reaction catalyst to produce a second shift gas containing hydrogen and carbon dioxide. In a step (h) the second shift gas is separated into a second hydrogen gas stream and a carbon dioxide stream by means of a membrane separation.

The above process is advantageous because it permits the steam reforming reactions and the water-gas shift reactions to be run at temperatures favouring the production of hydrogen from the equilibrium reaction. The steam reforming may be conducted at temperatures of at least 550 °C, and preferably from 700 °C to 1100 °C, which favours the production of hydrogen since the reforming reaction is very endothermic. The water-gas shift reaction may be run at temperatures of from 200 °C to 600 °C, which also favours the production of hydrogen since the shift reaction is slightly exothermic. The water-gas shift reaction is conducted separately from the reforming reaction, thereby avoiding a shift reaction equilibrium unfavourable to the production of hydrogen which occurs when the shift reaction and the reforming reaction are conducted together.

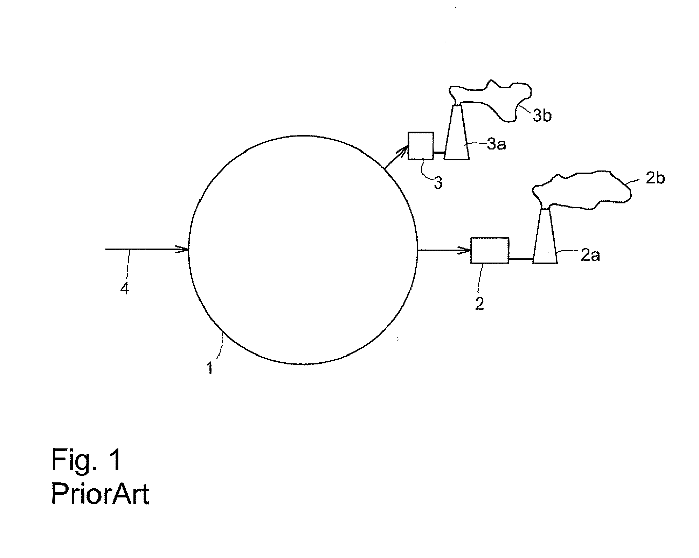

Figure 1 shows a system according to the prior art, comprising more than one furnace 2 and 3, a common fuel delivery system 1 and a supply 4 for a hydrocarbon based fuel. The two furnaces as shown in Figure 1 may represent any number of furnaces in accordance with the present invention.

Each furnace 2 and 3 is connected to the common fuel delivery system 1 and stacks 2a and 3a. In each furnace the hydrocarbon-based fuel is combusted with air in numerous burners resulting in a flue gas being generated in each furnace. From each stack 2a and 3a the flue gas 2b and 3b, comprising CO₂, is emitted into the environment.

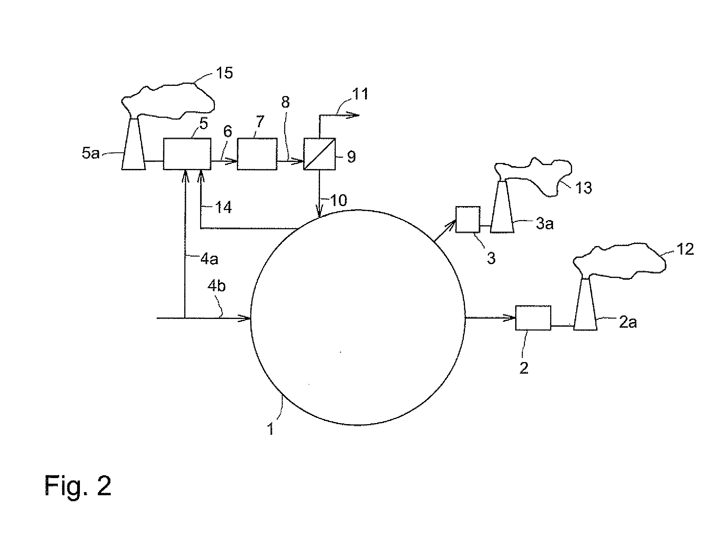

Figure 2 shows a system according to the invention. The system comprises one or more furnaces 2 and 3 and a common fuel delivery system 1 connected to said furnaces as in Figure 1. In addition the system has a steam reforming unit 5 fluidly connected to a hydrocarbon feedstock supply line 4a. Part of the hydrocarbon feedstock may be supplied to the common fuel delivery system 1 via line 4b. The steam reforming unit 5 itself is also a furnace according to the definition of the present invention. The fuel for the steam reforming unit 5 is provided from the common fuel delivery system 1 via supply line 14. The resulting flue gasses 15 are emitted into the environment via stack 5a. Steam reformer unit 5 is fluidly connected to a water gas shift unit 7 via supply line 6 through which the gas comprising hydrogen and carbon monoxide is transported. The system also comprises a membrane separation unit 9 fluidly connected to the water gas shift unit via supply line 8. Through supply line 8 the shifted gas is transported to said membrane separation unit 9. The membrane separation unit 9 has an outlet for a hydrogen rich permeate 10 which is fluidly connected to the common fuel delivery system 1. The membrane separation unit 9 also has an outlet for a CO₂ rich retentate 11 which can be connected to a CO₂ transport system and eventually to a CO₂ storage, which are not shown in this Figure 2.

The fuel as present in the common fuel delivery system 1 of Figure 2 is rich in hydrogen as compared to the fuel composition of the existing process of Figure 1. This will result in that the flue gasses 12, 13 and 15, as generated in furnaces 2 and 3 and steam reformer unit 5 respectively, will contain less CO₂. The CO₂ generated by the system and process according to the invention is captured in a simple manner and at a single point as stream 11. This is advantageous when compared to a situation wherein CO₂ would have to be removed from each single stack 2a and 3a.

This will be further illustrated by the following

### examples.

### Comparative Example A

In a chemical complex 20 furnaces are fed by a common fuel delivery system. The common fuel delivery system has an operating pressure of 0.4 MPa. A mixture of C₁-C₄ hydrocarbons are fed to the burners of said furnaces and 9 ton/hour of CO₂ is discharged from each stack of each furnace into the environment (totalling 180 ton/hour CO₂ for the entire complex).

### Example 1

To the common fuel delivery system of Comparative Example A hydrogen was fed as prepared starting from part of the mixture of C₁-C₄ hydrocarbons of Comparative Example A. 20 ton/h hydrogen and 114 ton/h CO₂ is prepared in accordance with the process as described in WO-A-2008/067360. The hydrogen has a purity of >95vol.% and a pressure of 0.5 MPa and the CO₂ comprising gas has a CO₂ content of >95 vol.% at a pressure of 15 MPa as obtained after performing a further compression step to make the CO₂ comprising gas suited for transport and storage.

The hydrogen is fed via the common fuel delivery system to the 20 furnaces yielding a flue gas emitting only 84 ton/h CO₂ into the environment.

Thus a reduction of 96 ton/hour of CO₂ is achieved. Example 2 illustrates a process wherein 114 ton/hour of CO₂ is obtained at a pressure of 15 MPa in a single process. This is advantageous because it can be directly stored in for example underground storage facilities.

If the same amount of CO₂ had to be isolated from each single stack of each single furnace in the process of Comparative Example A extensive gas treating would have to be performed for each stack in combination with pressurisation of the isolated CO₂ before it can be stored in underground storage facilities.

## Claims

1. Process comprising the operation of more than one furnace, which furnaces run on a fuel as provided by a common fuel delivery system, wherein to said fuel a hydrogen comprising gas is provided which is prepared by (i) reforming, steam reforming or gasification of a hydrocarbon feedstock to obtain a gas comprising hydrogen and carbon monoxide, (ii) converting part of the carbon monoxide in said gas to hydrogen and carbon dioxide by means of a catalysed water gas shift reaction to obtain a shifted gas and (iii) separating hydrogen from said shifted gas by means of a membrane separation to obtain the hydrogen comprising gas and a carbon dioxide comprising gas, wherein the carbon dioxide comprising gas is obtained at a more elevated pressure than the hydrogen comprising gas.

2. Process according to claim 1, wherein the process is a refinery process and wherein the hydrocarbon feedstock is a gaseous fuel comprising hydrocarbons having 1 to 4 carbon atoms, a liquid residue or solid petroleum coke.

3. Process according to claim 1, wherein the process is a Fischer-Tropsch synthesis process comprising a Fischer-Tropsch reactor and hydro-processing units downstream the Fischer-Tropsch synthesis reactor and wherein the hydrocarbon feedstock is the gaseous by-product as generated in the Fischer-Tropsch synthesis reactor and/or the gaseous by-products generated in the hydro-processing units.

4. Process according to claim 1, wherein the process is a steam cracker process to make ethylene and propylene, wherein the furnaces are steam cracking furnaces and wherein the hydrocarbon feedstock is a gas comprising the methane by-product of the steam cracking process.

5. Process according to any one of claims 1-4, wherein the process comprises more than 5 furnaces, which run on a fuel as provided by a common fuel delivery system.

6. Process according any one of claims 1-5, wherein the hydrocarbon feedstock is a gaseous hydrocarbon feedstock and wherein the gas comprising hydrogen and carbon monoxide is prepared in step (i) by steam reforming.

7. Process according to claim 6, wherein the following steps (a)-(h) are performed: in step (a) the gaseous hydrocarbon feedstock is first contacted in with steam and a reforming catalyst at a temperature of at least 550 °C to produce a first reformed gas containing hydrogen, carbon monoxide, steam and at least one vaporized hydrocarbon; in step (b) the first reformed gas is subsequently cooled to a temperature of from 200 °C to 500 °C; in step (c) the cooled reformed gas is contacted with a water-gas shift catalyst to produce a first shift gas containing hydrogen, carbon dioxide, steam, and at least one vaporized hydrocarbon; in step (d) hydrogen is separated by means of a membrane separation from the first shift gas to produce a first hydrogen gas stream and a hydrogen-depleted gas containing carbon dioxide, steam, and at least one vaporized hydrocarbon; in step (e) the hydrogen-depleted gas is contacted with a reforming catalyst at a temperature of at least 550 °C to produce a second reformed gas containing hydrogen, carbon monoxide, and steam; in step (f) the second reformed gas is cooled to a temperature of from 200 °C to 500 °C; in step (g) the cooled second reformed gas is contacted with a water-gas shift reaction catalyst to produce a second shift gas containing hydrogen and carbon dioxide; in step (h) the second shift gas is separated into a second hydrogen gas stream and a carbon dioxide stream by means of a membrane separation.

8. Process according to any one of claims 1-7, wherein The membrane as used in the membrane separation unit is a H₂-selective membrane having a permselectivity of H₂ over CO₂ of at least 50.

9. Process according to claim 8, wherein the membrane is based on a hydrogen-permeable and hydrogen-selective metal.

10. Process according to claim 9, wherein the hydrogen-selective metal is one of the following metals or alloys Pt, Ni, Au, Pd, Pd-V, Pd-Ta, Pd-Nb, Pd-Ag, Pd-Cu and Pd-Au.

11. Process according to any one of claims 1-10, wherein the shifted gas and the carbon dioxide comprising gas have a pressure between 2 and 10 Mpa and wherein the pressure of the hydrogen as it is provided to the common fuel delivery system is between 0.2 and 1 Mpa.

12. System comprising one or more furnaces, a common fuel delivery system connected to said furnaces, a reforming, steam reforming or gasification unit fluidly connected to a hydrocarbon feedstock supply line, a water gas shift unit fluidly connected to the reforming, steam reforming or gasification unit and a membrane separation unit fluidly connected to the water gas shift unit, wherein the membrane separation unit has an outlet for a hydrogen rich permeate which is fluidly connected to the common fuel delivery system.

13. Method for retrofitting an existing system comprising one or more furnaces, a common fuel delivery system connected to said furnaces and a hydrocarbon-based fuel supply line connected to said common fuel delivery system, wherein to said existing system is added a reforming, steam reforming or gasification unit, a water gas shift unit fluidly connected to the reforming, steam reforming or gasification unit and a membrane separation unit fluidly connected to the water gas shift unit, wherein the membrane separation unit has an outlet for a hydrogen rich permeate which is fluidly connected to the common fuel delivery system and wherein the hydrocarbon-based fuel supply line of the existing system is connected to the reforming, steam reforming or gasification unit.
